(19) Europäisches Patentamt
European Patent Office
Office européen des brevets

(11) EP 3 990 570 B1

# (12) EUROPEAN PATENT SPECIFICATION

(45) Date of publication and mention of the grant of the patent:
**11.06.2025 Bulletin 2025/24**

(21) Application number: **20739487.5**

(22) Date of filing: **26.06.2020**

(51) International Patent Classification (IPC):
***C09K 21/02*** *(2006.01)* ***C09K 21/10*** *(2006.01)*
***C09K 21/14*** *(2006.01)* ***C08K 5/09*** *(2006.01)*
***C08K 5/544*** *(2006.01)*

(52) Cooperative Patent Classification (CPC):
**C09K 21/10; C09K 21/14**

(86) International application number:
**PCT/NO2020/050185**

(87) International publication number:
**WO 2020/263108 (30.12.2020 Gazette 2020/53)**

## (54) POLYMER FLAME RETARDANT AND METHOD FOR ITS MANUFACTURE

POLYMERES FLAMMHEMMENDES MITTEL UND VERFAHREN ZU SEINER HERSTELLUNG

AGENT IGNIFUGE POLYMÈRE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 NO 20190822**

(43) Date of publication of application:
**04.05.2022 Bulletin 2022/18**

(73) Proprietor: **Klingelberg Products AS**
**1415 Oppegaard (NO)**

(72) Inventor: **MÄNNLE, Ferdinand**
**1415 Oppegaard (NO)**

(74) Representative: **Onsagers AS**
**P.O. Box 1813 Vika**
**0123 Oslo (NO)**

(56) References cited:
**CN-A- 108 485 172** **US-A1- 2019 084 879**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present invention belongs to the technical field of flame retardants, and more particularly flame retardant and flame retardant mixtures comprising polymers. The present invention relates to a polymer suitable as flame retardant wherein the polymer exhibits film forming properties and miscibility with coating and moulding compositions. Flame retardance is provided at a low weight to weight ratio in relation to substrate or matrix.

## Background

Flame retardants inhibit, suppress, or delay ignition of flammable materials and prevent the spread of fire. They interfere with radical processes, which are important for the development of fire, act as chemical coolants and/or form a barrier between the fire and the flammable material.

Flame retardants comprising polymers are widely investigated. Char yield and barrier properties of the formed char layer are assumed to be improved with polymers as starting material.

CN 109233402 A discloses a fireproof coating comprising a silicone-acrylic polymer, ammonium polyphosphate, melamine and dipentaerythritol as charring substance.

CN 108822697 A discloses a flame retardant coating comprising epoxy acrylate resin, amino resin, fillers, ammonium polyphosphate, a flame-retardant charring agent and a film forming agent.

CN 108641559 A discloses an intumescent flame retardant coating comprising modified ammonium polyphosphate, hyperbranched polyester, and polyvinyl alcohol. The coating composition is dissolved in ethanol.

US 2015004402 A discloses an intumescent coating composition having improved char yield, comprising particulate (1-100 $\mu$m) poly(phenylene ether), a film-forming binder, an acid source and a blowing agent.

CN 102241904 A discloses an aqueous expansion-type fireproof coating, which is prepared by sufficiently grinding a film-forming material formed by compounding thermosetting polyurethane-acrylate emulsion and thermoplastic vinyl acetate-acrylate emulsion, ammonium polyphosphate used as an acid source, white sugar used as a carbon source, dicyandiamide and diammonium hydrogen phosphate used as gas sources and porous perlite used as a flame-retardant aid.

CN 101914333 A discloses a fire protecting coating for steel structures, comprising a laminar silicate nano composite emulsion prepared by using an in-situ emulsion polymerization method as a film-forming base material, with charcoal-forming agent and catalyst added.

KR 20080047146 discloses a flame retardant miscible with thermoplastics and thermosets comprising a cyclic phosphazene crosslinked by piperazine. Mixtures of the flame retardant with thermoplastics and/or thermosets have high flame-retardant effect by forming a thick char film on the surface of a resin.

All of these documents disclose flame retardants mixed with film forming polymers. Said polymers do not show an intrinsic low flammability or fire retardancy. Flame retardancy is provided by suitable flame retardant additives, which are mixed with the polymer. Variations in flame retardant performance of manufactured polymer comprising coating materials may occur due to different grade of mixing and dispersion of flame retardant additives. Furthermore leaching and ageing of flame retardant additives may occur after application of the coating material.

EP 1576073 B1 discloses fire resistant materials based on inorganic-organic hybrids (IOHs) and polyamides. Improved charring of the fire resistant materials and possibly improved barrier properties of the formed char layer are mentioned but no details are disclosed. Film forming of IOHs alone is not described and fire resistance is limited to mixtures of IOHs and polyamides.

US 5041514 A discloses poly(silyloxytetraalkylbiphenyleneoxide)s as flame retardant film-forming materials useful as high performance injection moldable thermoplastic and dielectrics. A high charring yield is shown. The miscibility with thermosets, thermoplastics is not disclosed. The application as fire retardant coating is not disclosed.

US 4826899 A discloses a low smoke generating, high char forming, substantially nondripping flame resistant thermoplastic multi-block copolyester, containing a bromine flame retardant antimony trioxide, alumina trihydrate and other fillers and coupling agents. Bromine flame retardants and antimony trioxide are frequently not regarded as environmentally sustainable.

Brominated epoxy resins are widely known, e.g. from US 4965657 A and US 5443911 A. Film forming flame retardant coatings and compositions can be obtained. The same is true when brominated and other halogenated additives are used as teached in WO 17179340 A1, EP 2097485 A2 and EP 1449880 B1. However brominated monomers, polymers and additives for polymer compositions are questionable from an environmental point of view and difficult to use in combination with materials from renewable sources such as cardboard, wood or polymers made from renewable monomers.

EP 1627896 B1 and EP 1607400 B1 disclose phosphorus-containing flame retardants and their use in polymer compositions. These flame retardants are frequently acceptable from an environmental point of view. However they often show large volatility, poor heat resistance and limited compatibility with the polymer matrix. Once phosphates have

entered the water system, they can create a large proliferation of algae, which may be harmful to water quality.

Blade coating and curtain coating units are frequently used in industrial coating processes with high productivity ((EP 1516960 A1). Film forming properties of binders in flame retardant coating applications are therefore of high interest. Too low film forming properties of flame retardant coating formulations lead to reduced speed on the coating line as well as increased thickness and drying time of the coating. These issues may impair the usefulness of a flame retardant coating formulation because too low film forming properties leave it behind as unusable in industrial coating processes.

Highly branched organic inorganic hybrid polymers exhibit excellent film forming properties. EP2260078 B1, WO 2006045713, EP 1740643 B1, EP 1756202 B1, EP 1943293 B1 and EP 3341339 B1 disclose methods for preparing such organic inorganic hybrid polymers. In all methods significantly large amounts of solvents compared to the amount of obtained hybrid polymer are used. The hybrid polymers are either isolated as solvent based solution or contain significant amounts of solvent. EP 1943293 B1 claims a hybrid polymer which is suitable as UV absorber. The disclosed data for the preparation of the UV-absorber shows that the product is a mixture of solvent, hybrid polymer with claimed amide structure and hybrid polymer with claimed amidiner structure. None of the hybrid polymers is disclosed as flame retardant hybrid polymer.

CN 108 485 172 A discloses a flame-retardant and bacteriostatic 3D printing material and a preparation method thereof. The 3D printing material comprises the following components in parts by weight: 80 to 112 parts of ABS resin (acrylonitrile butadiene styrene resin), 10 to 20 parts of 3-aminopropyltriethoxysilane, 11 to 17 parts of magnesium acetate, 13 to 18 parts of dodecyl gallate, 5 to 11 parts of monochlorotriazine-beta-cyclodextrin, and 1 to 5 parts of 1,4-naphthalene dicarboxylic acid. The thermal insulation 3D printing material not only has the advantages of good bacteriostatic effect and high fireproof and flame-retardant performance, but is safer to use, too. The thermal insulation 3D printing material is also relatively small in thermal conductivity, good in thermal insulation effect, good in mechanical performance, long in service life, and high in marketing value.

US2019084879 AA relates to a method for manufacturing a surface-treated particulate inorganic material, and more particularly to methods for manufacturing lightweight particulate inorganic materials, such as expanded perlite or expanded clay, coated with one or more silsesquioxanes. The surface-treated particulate inorganic material according to the present invention is suited for introduction into construction materials, such as mortar, plaster, cement and lightweight concrete, to lower the loose bulk density and improve the mechanical strength of the mixture. There is a need for film forming flame retardants with intrinsic flame retardance and unquestioned environmental acceptance.

## Objects

It is therefore an object of the present invention to provide a film forming polymer with intrinsic flame retardant properties. It is a further object to provide methods for the manufacture of film forming polymer with intrinsic flame retardant properties. It is still a further object to improve the fire resistance of flammable materials by processes such as, but not limited to, mixing or coating with film forming polymer with intrinsic flame retardant properties.

## The invention

The above mentioned objects are achieved by a method as defined in claim 1.

According to another aspect the present invention concerns a flame retardant or component in flame retardant mixtures as defined by claims 7 and 9.

Preferred embodiments of the different aspects of the invention are disclosed by the dependent claims.

The method according to the invention comprises two steps:

i. Conversion of primary and/or secondary amines, covalently bound to silane moieties, with chemical substances, obtainable from carboxylic acids or carbonic acid

ii. Conversion of the product from step i. with a HO-functionalized substance

Conversion of primary and/or secondary amines with chemical substances, obtainable from carboxylic acids or carbonic acid can provide products, wherein said products exhibit at least three covalent bonds between the functional C-atom provided by the chemical substance, obtainable from carboxylic acids or carbonic acid and the N-atoms provided by the primary and/or secondary amines and wherein two covalent bonds between the functional C-atom and the N-atoms represent a C=N double bond (Science of Synthesis: Houben-Weyl Methods of Molecular Transformations, Compounds with Four and Three Carbon-heteroatom Bonds, Vol 22, p. 379 ff.).

Primary and/or secondary amines which are bound to at least partially hydrolysable silane moieties can be converted with chemical substances, obtainable from carboxylic acids or carbonic acid as mentioned above. An example is the conversion of 3-Aminopropyl-triethoxysilan [CAS 919-30-2] having a primary amine moiety only, with Methyl parahydroxybenzoate [CAS 99-76-3]:

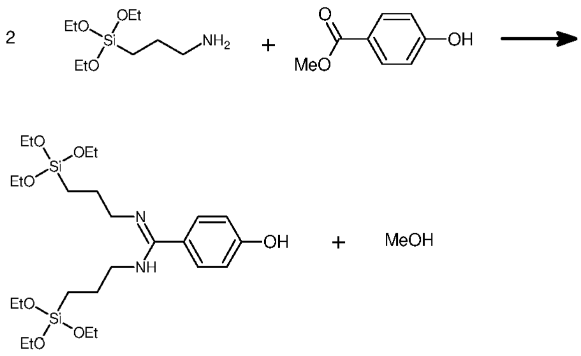

The product contains two moieties of at least partially hydrolysable silane.

A similar conversion takes place with N-(2-Aminoethyl)-3-aminopropyl-triethoxysilane [CAS 5089-72-5] having a primary and a secondary amine moiety and Methyl parahydroxybenzoate:

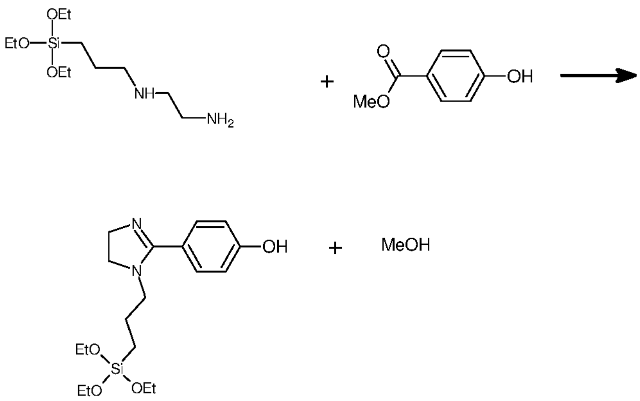

The product contains one moiety of at least partially hydrolysable silane.

Table 1 shows examples for suitable amines covalently bound to silane moieties according to the invention.

Table 1: Examples for suitable amines covalently bound to silane moieties according to the invention

| Name | CAS no | Structure | $Z_1/Z_2$ |
|---|---|---|---|
| 3-Aminopropylmethyldiethoxysilane | 3179-76-8 | 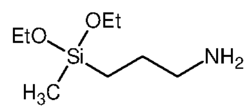 | 1 |
| 3-Aminopropyltriethoxysilane | 919-30-2 | 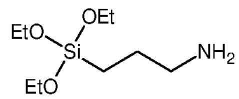 | 1 |
| 3-Aminopropyltrimethoxysilane | 13822-56-5 | 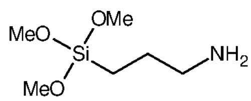 | 1 |
| 3-Aminopropyldimethyl-methoxysilane | 31024-26-7 | 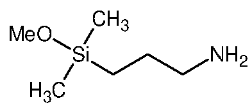 | 1 |
| 4-Aminobutyl-triethoxysilane | 3069-30-5 | 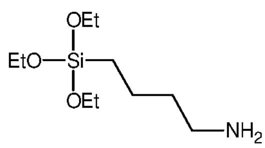 | 1 |

(continued)

| Name | CAS no | Structure | $Z_1/Z_2$ |
|---|---|---|---|
| N-(2-Aminoethyl)-3-aminopropyltriethoxysilane | 5089-72-5 | 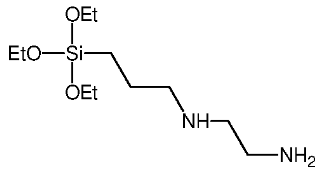 | 2 |
| N-(2-Aminoethyl)-3-aminopropyltrimethoxysilane | 1760-24-3 | 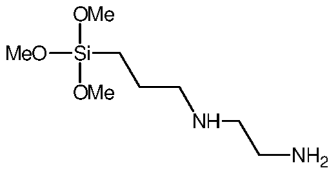 | 2 |
| (Aminoethylamino-methyl)phenethyl-trimethoxysilane | 74113-77-2 | 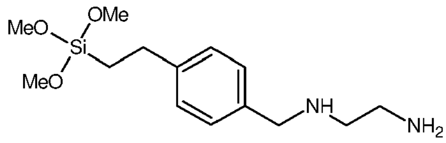 | 2 |
| $Z_1$: number of moles of amine moiety; $Z_1$ is a number >0<br>$Z_2$: number of moles of at least partially hydrolysable silane, to which the $Z_1$ moles of amine moiety are covalently bound to; $Z_2$ is a number >0.<br>$Z_3$: number of moles of chemical substances obtainable from carboxylic acids or carbonic acid; $Z_3$ is a number >0<br>$Z_1/Z_2 \geq 1$: at least one mole amine per mole of silane<br>$Z_1 > Z_5$.: excess of number of moles of amine compared to number of moles of chemical substances obtainable from carboxylic acids or carbonic acid. In case the chemical substance obtainable from carboxylic acids or carbonic acid has more than one mole of functionality which can react with amines, the number of moles of amines should be increased accordingly. | | | |

The invention is not limited to the above mentioned amines. Other suitable amines can easily be identified by simple trial and error. Prior to step i. the silanes may be partially hydrolysed and/or converted with metal oxide nanoparticles, wherein the nanoparticles are preferably dispersed in a suitable medium. A considerable number of such conversions of metal oxide nanoparticles with aminosilanes is presented in WO 2006045713.

Chemical substances obtainable from carboxylic acids or carbonic acid, which are suitable for the conversion of primary and/or secondary amines in step i. are carboxylic acids and carbonic acid, their esters, halogenides, amidoesters, amides, amidines, guanidines, isocyanates and isonitriles. Chemical substances obtainable from carboxylic acids or carbonic acid can be expressed by formula (I), (II) or (III)

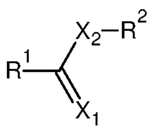

(I)

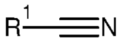

(II)

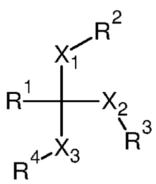

(III)

$R^1$, $R^2$, $R^3$, $R^4$ are independently from one another selected from a group of chemical moieties of low polarity comprising at least hydrogen, saturated $C_1$-$C_{24}$ alkyl, unsaturated $C_1$-$C_{24}$ alkyl, N-alkyl, $C_1$-$C_{12}$ alkylphenyl, aryl with 6 to 20 ring atoms, heterocyclyl with 5 to 20 ring atoms. All of these may optionally be substituted by moieties selected from a

group of chemical moieties of high polarity comprising at least hydroxy, alkoxy, cyano and carbamoyl moieties. $X_1$, $X_2$ and $X_3$ are independently from one another selected from a group comprising at least O, S and NH. One or more of $R^2$-$R^4$ may be absent and a double or triple bond is present to the remaining $R^2$-$R^4$ group(s);

The chemical substances used in the present invention are 2-hydroxybenzoic acid, 3-hydroxybenzoic acid, 4-hydroxybenzoic acid, 2-hydroxynaphtoic acid, 3-hydroxynaphtoic acid, 4-hydroxynaphtoic acid, 6-hydroxynaphtoic acid and esters or amides thereof, 2-hydroxybenzonitrile, 3-hydroxybenzonitrile, 4-hydroxybenzonitrile, 2-hydroxynaphtonitrile, 3-hydroxynaphtonitrile, 4-hydroxynaphtonitrile, 6-hydroxynaphtonitrile.

The reaction can be performed in state-of-the-art-reactors, typically at ambient pressure, moderate increased pressure (typically less then 10 bar) or reduced pressure (typically 0.05-0.5 bar). Typical temperatures for the conversion are 150 C°-220 C°. High viscosities during conversion of polymeric amines with fatty acid which have to be dealt with by addition of solvent as described e.g. in EP 2260078 B1 do not occur. The conversion of amine with carboxylic acids or substances derived thereof according to the present invention can be performed without addition of solvents. Lower viscosity means shorter reaction time and less danger for partly degrading the product.

In order to improve the inherent flame retardance of the flame retardant and to adjust its film forming properties the product from step i. is converted with at least one HO-functionalized substance of formula (IV) in step ii.

$$M_x(OH)_yR^5_z \qquad (IV)$$

x, z are integer numbers in the range from 0 to 8,
y is an integer number in the range from 1 to 8

$$x+z > 0$$

$R^5$ is selected from a group comprising at least H, saturated $C_1$-$C_{24}$ alkyl, unsaturated $C_1$-$C_{24}$ alkyl, and $C_1$-$C_{12}$ alkylphenyl. Typical HO-functionalized substance of formula (IV) may be selected from the group consisting of water, alcohols, sugars, clays, metal hydroxides, polyalcohols and carbohydrates.

This conversion is typically performed after cooling the product from step i. to below 100 °C and proceeds rapidly. The HO-functionalized substance can react with Si-OR groups in the product from step i. Conversion with an alcohol of formula $R^5$-OH, wherein x=y=z=1 and M=H in formula (IV), can lead to at least partial exchange of R with $R^5$. Different solubility and/or hydrophobicity of the product after step (ii) compared to the product after step (i) can thus be obtained. A special case is $H_2O$, where x=0, y=z=1 and $R^5$=H in formula (IV). The formed Si-OH groups may perform condensation to Si-O-Si moieties. R-OH obtained from Si-OR groups can serve as diluent. Hydroxides of metals such as Al, Si, Fe may perform condensation reactions with Si-OH groups which are comparable to the condensation of two Si-OH groups. Typical hydrolysis and condensation reactions are shown below:

a)

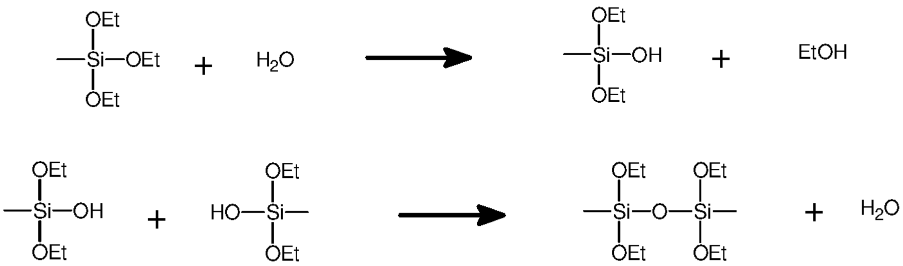

b)

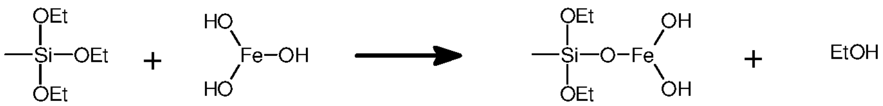

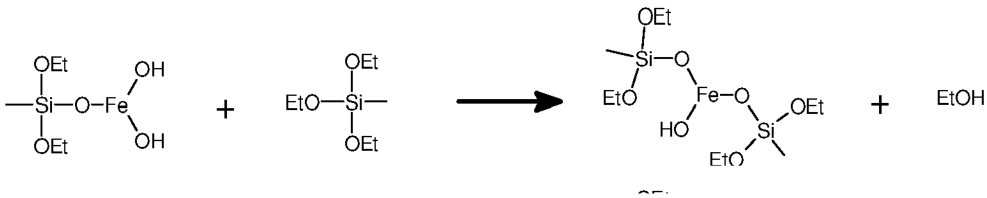

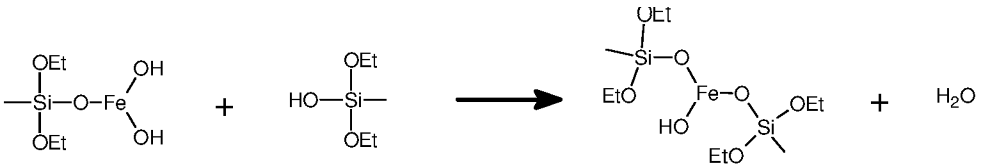

When M is selected from the group of H, Al, Si, Fe usually products with highly stable Si-O-M moieties can be obtained. When M additionally can be selected from the group of Ti, Cu, Zn usually products with fairly stable Si-O-M moieties can be obtained. The stability of the Si-O-M moieties can have influence on the flame retardant during preparation, processing and application.

The HO-functionalized substance can also react with the amidine moiety in the product from step (i).

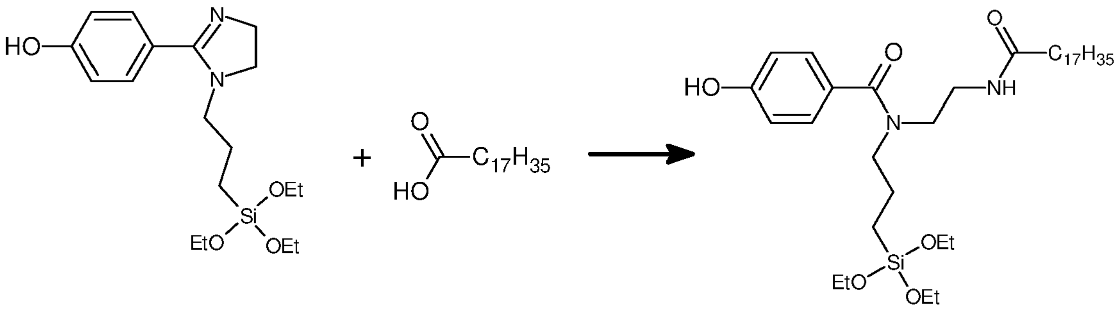

However, since the amidine moiety significantly contributes to the flame retardant properties of the product from step i. the importance of such a conversion is often limited.

Typical film forming flame retardant according to the present invention are shown by the chemical structures in formula (V), (VI), (VII) and (VIII):

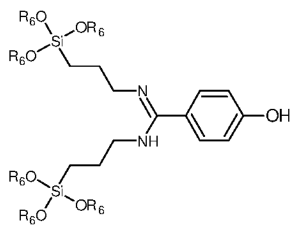

(V)

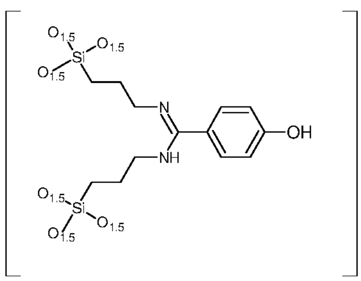

(VI)

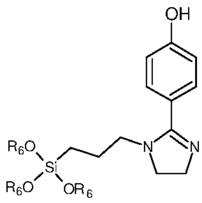

(VII)

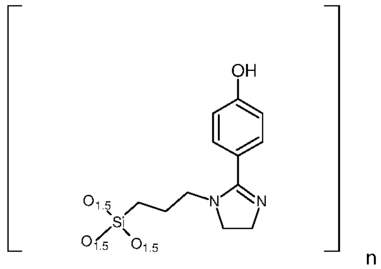

(VIII)

The number n is an even integer from 2 to 16. $R_6$ is typically H, alkyl or clay and optionally connected to each other by covalent bonds. The film forming flame retardants of formula (V) and (VI) can be obtained by the same procedure in step (i). $R_6$=alkyl represents the product right after step (i). It can be isolated and stored as a stable product. $R_6$=H is obtained when the HO-functionalized substance $H_2O$ is added and $R_6$=alkyl is hydrolysed but not condensed. After condensation of the Si-OH groups ($R_6$=H) the film forming flame retardant of formula (VI) is obtained. $R_6$=clay is obtained when clay is added in step (i), after step (i), in step (ii) or after step (ii). The film forming flame retardants of formula (VII) and (VIII) can be obtained in a similar way.

Clay consists mainly of oxides and hydroxides of the metals Si, Al, Fe, Ca, Mg, K, Na. Additionally the oxides and hydroxides of the metals Ti, Mn *(*Characterization of Colombian clay and its potential use as adsorbent, Hindawi, The Scientific World Journal, Volume 2018, Article ID 5969178*),* Cu, Co, Pb, Cd and Zn *(*Assessment of carcinogenic heavy metals in some Nigerian clays used for pharmaceutical purposes, SDRP Journal of Earth Sciences & Environmental Studies, ISSN: 2472-6397*)* can be present. Clay is therefore a preferred HO-functionalized substance according to the present invention comprising different metals M in formula (IV).

The film forming flame retardant according to the present invention may after preparation be brought into contact with at least one low flammable substance selected from the group consisting of inorganic oxides, hydroxides, carbonates, sulfates, phosphates, chlorides, bromides, carbohydrates, amides, melamines, ureas, guanidines, salts of guanidines, waxes, thermoplastic materials. The presence of the film forming flame retardant according to the present invention may further reduce the flammability of the low flammable substance or facilitate its use in flame retardant mixtures. The low flammable substances contain halogen.

An embodiment of the present invention is that M is at least partly chosen to be Fe and the low flammable substance is chosen to be a chlorinated sugar.

Another embodiment of the present invention is that the film forming flame retardant prior to step (i), after step (i) or after step (ii) is mixed with hydrophobic matter selected from a group consisting of binders, thermoplastics, thermosets, waxes, oils, fats, solvents. This procedure may yield stable mixtures with good distribution of the components.

Another embodiment of the present invention is that the $Z_2$ moles of one or more silane are partially hydrolysed, before or after step (i). This is the case if for instance an added material such as clay contains water which will be used up in a partial hydrolysation of the silane.

Another embodiment of the present invention is that the content of solvent in the film forming flame retardant is less than 10 g per 100 g flame retardant, more preferred less than 5 g per 100 g flame retardant and most preferred less than 2 g per 100 g flame retardant. Low content of solvent in the film forming flame retardant is preferred due to SHE (Safety Health and Environment) issues. Such low content of solvent can be easily obtained by the present invention, since no solvent is needed to reduce the viscosity during preparation or to improve the miscibility of the ingredients.

Yet another embodiment of the present invention are water based formulations of the film forming the flame retardant in the form of an aqueous or water-dilutable solution or dispersion. Such formulations can be obtained by application of known emulsifying techniques. Deprotonation of hydroxyl substituted aromatic moieties can significantly improve the water solubility of products after step (ii).

In another embodiment of the present invention the flame retardant is present on a surface selected among the group consisting of paper surface, cardboard surface, wooden surface or within wooden plates, boards, laminates, particle boards.

Yet another embodiment of the present invention are articles or products comprising at least one of binders, thermoplastics, thermosets, waxes, oils, fats, solvents, wooden plates, boards, laminates, particle boards together with at

least one film forming flame retardant according to the present invention.

Example 1:

Preparation of film forming flame retardant step (i)
$Z_1$=2
$Z_2$=2
$Z_1/Z_3$=2

2 moles of 3-aminopropyltriethoxysilane [919-30-2] are introduced in a 1000 ml 3-necked reaction flask and heated to 80 °C under stirring. 1 mole of 4-hydroxymethylbenzoate [99-76-3] is added as powder within 5-10 minutes. Heating is increased and the reaction mixture becomes clear at 120°C. The reaction mixture is slowly heated to 180 °C and about 50 g of destillate is collected. A clear colourless and slightly viscous product is obtained.

Example 2:

Preparation of film forming flame retardant step (ii)
M=H

The product of example 1 is introduced in a 1000 ml 3-necked reaction flask and heated to 80 °C under stirring. $H_2O$ (6 moles) is added under vigorous stirring within 10-20 minutes. A clear product of low viscosity is obtained.

Example 3:

Preparation of film forming flame retardant step (ii)
M=H, Fe

The product of example 1 is introduced in a 1000 ml 3-necked reaction flask and heated to 80 °C under stirring. A dispersion of freshly precipitated $Fe(OH)_3$ (0.2 moles) in $H_2O$ (6 moles), with pH adjusted to 9-10 with sodium hydroxide is added under vigorous stirring within 10-20 minutes. A slightly redish product is obtained.

Example 4:

Preparation of film forming flame retardant step (ii)
M=H, Fe

The product of example 1 is introduced in a 1000 ml 3-necked reaction flask and heated to 80 °C under stirring. A dispersion of freshly precipitated $Fe(OH)_3$ (0.2 moles) in $H_2O$ (6 moles), which additionally contains 0.2 moles of sucralose (1,6-Dichloro-1,6-dideoxy-β-D-fructofuranosyl-4-chloro-4-deoxy-α-D-galactopyranosid, [56038-13-2] and which pH is adjusted to 9-10 with sodium hydroxide is added under vigorous stirring within 10-20 minutes. A slightly redish product is obtained.

Example 5:

Preparation of film forming flame retardant step (i) and step (ii)
$Z_1$=2
$Z_2$=2
$Z_3$=1

Addition of sucralose (chlorinated sugar, 1,6-Dichloro-1,6-dideoxy-β-D-fructofuranosyl-4-chloro-4-deoxy-α-D-galactopyranoside, CAS [56038-13-2])
M=H, Fe

2 moles of 3-aminopropyltriethoxysilane [919-30-2] are introduced in a 1000 ml 3-necked reaction flask and heated to 80 °C under stirring. A mixture of 1 mole of 4-hydroxymethylbenzoate [99-76-3] and 0.2 mole of sucralose is added as powder within 5-10 minutes. Heating is increased and the reaction mixture becomes clear at 120 °C. The reaction mixture is slowly heated to 180 °C and about 50 g of destillate is collected. A clear colourless and slightly viscous product is obtained.

The product is cooled to 80 °C under stirring. A dispersion of freshly precipitated $Fe(OH)_3$ (0.2 moles) in $H_2O$ (6 moles), with pH adjusted to 9-10 with sodium hydroxide is added under vigorous stirring within 10-20 minutes. A slightly redish product is obtained.

Example 6

Preparation of film forming flame retardant step (i)
$Z_1=2$
$Z_2=1$
$Z_1/Z_3=2$

1 mole of N-(2-Aminoethyl)-3-aminopropyl-trimethoxysilane [1760-24-3] is introduced in a 1000 ml 3-necked reaction flask and heated to 80 °C under stirring. 1 mole of 4-hydroxymethylbenzoate [99-76-3] is added as powder within 5-10 minutes. Heating is increased and the reaction mixture becomes clear at 120 °C. The reaction mixture is slowly heated to 180 °C and about 50 g of destillate is collected. A clear colourless and slightly viscous product is obtained.

Example 7

Preparation of film forming flame retardant step (ii)
M=H

The product of example 6 is introduced in a 1000 ml 3-necked reaction flask and heated to 80 °C under stirring. $H_2O$ (3 moles) is added under vigorous stirring within 10-20 minutes. A clear product of low viscosity is obtained.

Example 8

Burning test of cardboard

Packaging type cardboard (ca. 300 g/$m^2$) has been coated with products obtained in Example 2, 3, 4, 5 and 7 and flame tested. The cardboard samples are about 8 cm in width and 20 cm in length. They are coated by brushing two times on the front side, which is exposed to the flame and one time on the backside. Drying has been performed for 10 min in an air stream at 80°C. Flame: butane lighter with about 20 mm flame, top of flame in contact with cardboard sample for 60 seconds.

Table 2: Weight of burning test samples before and after fire test

| | raw [g] | coated [g] | coating [g] | after fire [g] | loss [g] | loss [%] |
|---|---|---|---|---|---|---|
| reference | 4,57 | 4,57 | 0,00 | 0,21 | 4,36 | 95,4 % |
| Example 2 | 4,61 | 5,28 | 0,67 | 4,80 | 0,48 | 9,1 % |
| Example 3 | 4,74 | 5,04 | 0,30 | 4,76 | 0,28 | 5,6 % |
| Example 4 | 4,81 | 5,44 | 0,63 | 5,11 | 0,33 | 6,1 % |
| Example 5 | 4,36 | 5,01 | 0,65 | 4,78 | 0,23 | 4,6 % |
| Example 7 | 3,86 | 4,50 | 0,64 | 4,41 | 0,09 | 2,0 % |

A clear difference between the uncoated reference and the coated samples has been found. All coated samples were self extinguishing within 5 seconds after removal of the butane flame. Weight loss is thoroughly less than 10% for the coated samples and more than 95% for the uncoated reference.

Example 9

Burning test of corrugated cardboard

Corrugated cardboard has been coated with the product obtained in Example 4 and flame tested. The cardboard samples are about 49 cm in width and 59 cm in length. They are coated by brushing two times on the front side, which is exposed to the flame and one time on the backside. Drying has been performed for 10 min in an air stream at 80°C.

Flame: butane torch with 3-4 kW effective heat and 15-20 cm flame. Distance between corrugated cardboard surface and torch nozzle: 2-3 cm.

| | raw [g] | Area [m2] | Coated [g] | coating [g/m2] | after fire [] | loss [g] | Loss [%] |
|---|---|---|---|---|---|---|---|
| reference | 168,3 | 0,29 | 168,3 | 0,0 | 7,0 | 161,3 | 95,8 % |

(continued)

| | raw [g] | Area [m2] | Coated [g] | coating [g/m2] | after fire [] | loss [g] | Loss [%] |
|---|---|---|---|---|---|---|---|
| Example 4 | 169,7 | 0,29 | 195,9 | 90,0 | 192,7 | 3,2 | 1,6% |

A clear difference between the uncoated reference and the coated sample has been found. The coated sample was self extinguishing within less than 5 seconds after removal of the butane flame. Weight loss is less than 2% for the coated samples and more than 95% for the uncoated reference.

Example 10

Burning test of particle board

Particle board samples have been prepared from 12 mm particle boards (Forestia 3-vegg). Sample boards of 122 cm length and 50 cm width have been roll coated with the product from Example 4 and dried under infrared lamps (2 kW). Coated boards with dry coating weight of 100-120 g/$m^2$ are obtained. Two sample boards have been connected on their long sides by four metal screws to form a 90 degree corner. Similar a reference corner has been made from uncoated boards.

Each of the corners has been installed in a steel chamber which is suitable for medium scale burning tests. 10 cm above the upper corner a paper stripe has been attached in order to test if the flames can exceed the top of the corner and spread above the corner. 600 g of gelatinized ethanol on about 100 g rockwool has been placed at the lower corner of the sample and ignited. After 20 minutes, the residues of burning gelatinized ethanol on rockwool have been removed.

Results:

The reference sample started to burn vigorously after 2:50 minutes. After 4:00 minutes the flames reached and exceeded the upper corner. The paper stripe was ignited after 4:50 minutes. The coated sample started to burn moderately after 4:30 minutes. The flames reached a maximum height of 70 cm (57% of total sample height). The upper corner was not reached by the flames and the paper stripe was not ignited.

The coated particle board would withstand a fire of about 20 kW heat for 20 min. The fire would not spread to burnable items above the board. The non-coated particle board would spread fire to burnable items above the board under similar conditions.

Example 11

Preparation of film forming flame retardant step (i) with clay added before step (i)

$Z_1$=2

$Z_2$=1

$Z_1/Z_3$=2

2 moles of N-(2-Aminoethyl)-3-aminopropyl-trimethoxysilane [1760-24-3] and 10 g of clay (Montmorillonite K-10, Aldrich) are introduced in a 1000 ml 3-necked reaction flask and heated to 80 °C under stirring. 2 mole of 4-hydroxymethylbenzoate [99-76-3] is added as powder within 5-10 minutes. Heating is increased and the reaction mixture becomes clear at 120 °C. The reaction mixture is slowly heated to 180 °C and about 100 g of destillate is collected. A transparent greyish and slightly viscous product is obtained.

Example 12

Preparation of film forming flame retardant step (ii)

M=H

The product of example 11 is introduced in a 1000 ml 3-necked reaction flask and kept at 20 °C under stirring. $H_2O$ (3 moles) is added under vigorous stirring within 10-20 minutes. The temperature raises to 60 °C due to the exothermal hydrolysis and condensation of the silane groups. This is a clear indication for the formation of amidine groups in the film forming flame retardant. Amide groups, which could be seen as an alternative product of the synthesis would not catalyse the hydrolysis and condensation in a similar way and thus the temperature would raise much slower and to a lower value.

180 g of a 10% w/w solution of sodium hydroxide in water is thereafter added. A clear product of low viscosity is obtained.

Example 13

Preparation of film forming flame retardant with addition of low flammable substances after step (ii)

50% w/w of the final product of example 12 is introduced in a 1000 ml 3-necked reaction flask and heated to 80 °C under stirring. A dispersion of freshly precipitated $Fe(OH)_3$ (0.1 moles) in $H_2O$ (6 moles), which additionally contains 0.1 moles of sucralose (1,6-Dichloro-1,6-dideoxy-β-D-fructofuranosyl-4-chloro-4-deoxy-α-D-galactopyranosid, [56038-13-2] and which pH is adjusted to 9-10 with sodium hydroxide is added under vigorous stirring within 10-20 minutes. A slightly redish product is obtained.

Example 14

Burning test of particle board

Particle board samples have been prepared from 12 mm particle boards (Forestia 3-vegg). Sample boards of 61 cm length and 15 cm width have been roll coated with the product from Example 12 and 13 and dried under infrared lamps (2 kW). Coated boards with dry coating weight of 170-200 g/$m^2$ are obtained. Two sample boards have been connected on their long sides by four metal screws to form a 90 degree corner. Similar a reference corner has been made from uncoated boards.

Each of the corners has been installed in a steel chamber which is suitable for medium scale burning tests. 300 g of gelatinized ethanol in an aluminium char has been placed at the lower corner of the sample and ignited. After 20 minutes, the residues of burning gelatinized ethanol in the aluminium char have been removed. The heat release measured by weight loss was 7-8 kW during the 20 minutes test and the area covered by heat from the burning ethanol was 0.1-0.2 $m^2$. The results are shown in the table below:

| No. | Type | Weight loss [%] | Maximum flame height [%] of sample height |
|---|---|---|---|
| 1 | Uncoated | 24.9 | >100 |
| 2 | Example 12, 200 g/$m^2$ | 7.4 | <50 |
| 3 | Example 13, 200 g/$m^2$ | 5,7 | <50 |
| 4 | Example 13, 170 g/$m^2$ | 5,7 | <50 |

The weight loss and the maximum flame height of the particle board samples with film forming polymer according to the present invention is significantly lower than the respective weight loss and maximum flame height of the uncoated particle board sample.

Example 15

Preparation of film forming flame retardant step (ii) and burning test of cardboard

10 g of the product of example 11 is mixed with 1.5 g glycerol (HO-functionalized substance) and warmed to 60 °C. Strong foaming occurs due to the reaction of glycerol with the hydrolysable moieties followed by emission of methanol. The strong foaming is a clear indication for the melt strength and the film forming properties of the film forming flame retardant according to the present invention.

The product was diluted with 5 g of 10% w/w sodium hydroxide solution. 0.92 g were applied to a cardboard according to example 8 and subjected to the respective burning test. The weight loss due to the fire test was 8.7% w/w.

## Claims

1. Method for the preparation of a film forming flame retardant comprising nitrogen and silicon in its chemical composition, said method comprising the following steps:

   i. conversion of $Z_1$ moles of amine moiety, selected from the group of primary and secondary amine and covalently bound to $Z_2$ moles of one or more at least partially hydrolysable silane moiety, with $Z_3$ moles of a chemical substance selected from a group of chemical substances obtainable from carboxylic acids or carbonic acid and

represented by formula (I), (II) or (III)

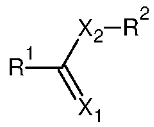

(I)

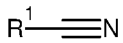

(II)

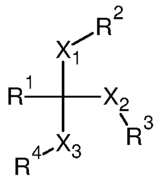

(III)

wherein

$Z_1$ is a number >0
$Z_2$ is a number >0

$$Z_1/Z_2 \geq 1$$

$Z_3$ is an number >0

$$Z_1 > Z_3$$

$R^1$, $R^2$, $R^3$, $R^4$ are independently from one another selected from a group of chemical functional groups of low polarity consisting of hydrogen, saturated $C_1$-$C_{24}$ alkyl, unsaturated $C_1$-$C_{24}$ alkyl, N-alkyl, $C_1$-$C_{12}$ alkylphenyl, aryl with 6 to 20 ring atoms, heterocyclyl with 5 to 20 ring atoms, all of these optionally substituted by moieties selected from a group of chemical moieties of high polarity consisting of hydroxy, alkoxy, cyano and carbamoyl moieties,
$X_1$, $X_2$ and $X_3$ are independently from one another selected from a group consisting of O, S and NH;

ii. conversion with at least one HO-functionalized substance of formula (IV)

$$M_x(OH)_yR^5_z \qquad (IV)$$

wherein M is selected from the group consisting of Al, Si, Ti, Fe, Cu, Zn,
x, z are integer numbers in the range from 0 to 8,
y is an integer number in the range from 1 to 8

$$x+z > 0$$

and $R^5$ is selected from a group consisting of H, saturated $C_1$-$C_{24}$ alkyl, unsaturated $C_1$-$C_{24}$ alkyl, and $C_1$-$C_{12}$ alkylphenyl, while

the chemical substance of formula (I), (II) or (III) is selected from a group consisting of 2-hydroxybenzoic acid, 3-hydroxybenzoic acid, 4-hydroxybenzoic acid, 2-hydroxynaphtoic acid, 3-hydroxynaphtoic acid, 4-hydroxynaphtoic acid, 6-hydroxynaphtoic acid and esters or amides thereof, 2-hydroxybenzonitrile, 3-hydroxybenzonitrile, 4-hydroxybenzonitrile, 2-hydroxynaphtonitrile, 3-hydroxynaphtonitrile, 4- hydroxynaphtonitrile, hydroxynaphtonitrile.

**2.** Method according to claim 1, wherein the film forming flame retardant after preparation is brought into contact with at least one low flammable substance selected from the group consisting of inorganic oxides, hydroxides, carbonates, sulfates, phosphates, chlorides, bromides, carbohydrates, amides, melamines, ureas, guanidines, salts of guanidines, waxes, thermoplastic materials, wherein the low flammable substances optionally contain halogen.

**3.** Method according to claim 2, wherein M is at least partly chosen to be Fe and the low flammable substance is chosen to be a chlorinated sugar.

**4.** Method according to any of the preceding claims, wherein the film forming flame retardant prior to step (i), after step (i) or after step (ii) is mixed with hydrophobic matter selected from a group consisting of binders, thermoplastics, thermosets, waxes, oils, fats, solvents.

**5.** Method according to any of the preceding claims, wherein the $Z_2$ moles of one or more silane are partially hydrolysed, before or after step (i).

**6.** Method according to any of the preceding claims, wherein clay is added in step (i), after step (i), in step (ii) or after step (ii).

**7.** Film forming flame retardant as manufactured by according to the method of any one of claims 1-6.

**8.** Film forming flame retardant according to claim 7, wherein the content of solvent in the flame retardant is less than 10 g per 100 g flame retardant, more preferred less than 5 g per 100 g flame retardant and most preferred less than 2 g per 100 g flame retardant.

**9.** Film forming flame retardant comprising nitrogen and silicon in its chemical composition, manufactured by conversion of $Z_1$ mole of primary and/or secondary amine moieties with $Z_3$ mole of a chemical substance obtainable from carboxylic acids or carbonic acid and represented by formula (I), (II) or (III)

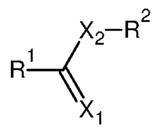
(I)

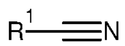
(II)

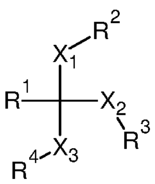
(III)

wherein

$Z_1$ is a number >0
$Z_2$ is a number >0

$$Z_1/Z_2 \geq 1$$

$Z_3$ is an number >0

$$Z_1 > Z_3,$$

wherein $R^1$, $R^2$, $R^3$, $R^4$ are independently from one another selected from a group of chemical moieties of low polarity consisting of hydrogen, saturated $C_1$-$C_{24}$ alkyl, unsaturated $C_1$-$C_{24}$ alkyl, N-alkyl, $C_1$-$C_{12}$ alkylphenyl, aryl with 6 to 20 ring atoms, heterocyclyl with 5 to 20 ring atoms, all of these optionally substituted by moieties selected from a group of chemical moieties of high polarity consisting of hydroxy, alkoxy, cyano and carbamoyl moieties, $X_1$, $X_2$ and $X_3$ are independently from one another selected from a group consisting of O, S and NH,

said primary and/or secondary amine moieties having covalent bonds to $Z_2$ mole of one or more at least partially hydrolysable silane, while the chemical substance of formula (I), (II) or (III) is selected from a group consisting of 2-hydroxybenzoic acid, 3-hydroxybenzoic acid, 4-hydroxybenzoic acid, 2-hydroxynaphtoic acid, 3-hydroxynaphtoic acid, 4-hydroxynaphtoic acid, 6-hydroxynaphtoic acid and esters or amides thereof, 2-hydroxybenzonitrile, 3-hydroxybenzonitrile, 4-hydroxybenzonitrile, 2-hydroxynaphtonitrile, 3-hydroxynaphtonitrile, 4-hydroxynaphtonitrile, hydroxynaphtonitrile.

**10.** Film forming flame retardant according to claim 9, wherein the film forming flame retardant is converted with at least one HO-functionalized substance of formula (IV)

$$M_x(OH)_yR^5_z \qquad (IV)$$

wherein M is selected from the group consisting of Al, Si, Ti, Fe, Cu, Zn,
x, z are integer numbers in the range from 0 to 8,
y is an integer number in the range from 1 to 8

$$x+z > 0$$

and $R^5$ is selected from the group consisting of H, saturated $C_1$-$C_{24}$ alkyl, unsaturated $C_1$-$C_{24}$ and alkyl, $C_1$-$C_{12}$ alkylphenyl.

**11.** Film forming flame retardant according to claim 7-10, wherein the flame retardant is selected from the group represented by the chemical structures in formula (V), (VI), (VII) and (VIII)

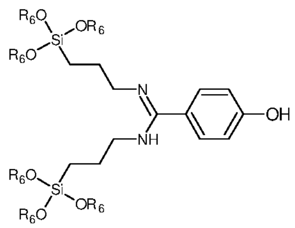

(V)

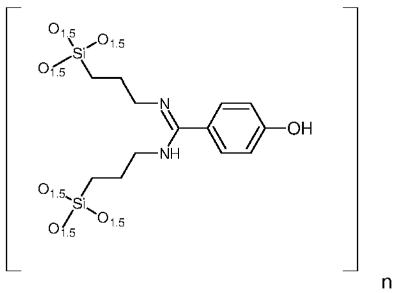

(VI)

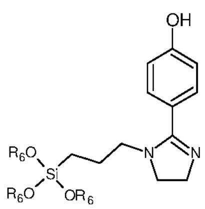

(VII)

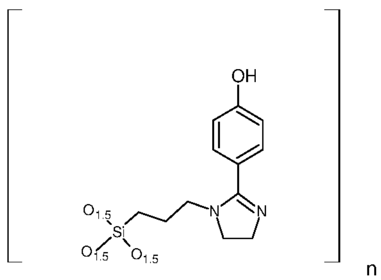

(VIII)

wherein n is an even number from 2 to 16 and $R_6$=H, alkyl or clay wherein R6 is optionally connected to each other by covalent bonds

**12.** Film forming flame retardant according to claim 7-11, wherein the flame retardant is present in mixtures comprising low flammable substances selected from the group consisting of inorganic oxides, hydroxides, carbonates, sulfates, phosphates, chlorides, bromides, carbohydrates, amides, melamines, ureas, guanidines, salts of guanidines, waxes, thermoplastic materials, which optionally may contain halogen, including any combination of two or more thereof.

**13.** Film forming flame retardant according to claim 7-12, wherein the flame retardant is present on a surface selected among the group consisting of paper surface, cardboard surface, wooden surface or within wooden plates, boards, laminates, particle boards.

**14.** Article or product comprising at least one of binders, thermoplastics, thermosets, waxes, oils, fats, solvents, wooden plates, boards, laminates, particle boards, wherein the article additionally comprises at least one film forming flame retardant according to any one of the previous claims.

## Patentansprüche

**1.** Verfahren zur Herstellung eines filmbildenden Flammschutzmittels, das Stickstoff und Silizium in seiner chemischen Zusammensetzung enthält, wobei das Verfahren die folgenden Schritte umfasst:

i. Umsetzung von $Z_1$ Mol Aminrest, ausgewählt aus der Gruppe der primären und sekundären Amine, der kovalent an $Z_2$ Mol eines oder mehrerer zumindest teilweise hydrolysierbarer Silanreste gebunden ist, mit $Z_3$ Mol einer chemischen Substanz, ausgewählt aus einer Gruppe von chemischen Substanzen, die aus Carbonsäuren oder Kohlensäure erhältlich sind und durch die Formel (I), (II) oder (III) dargestellt werden

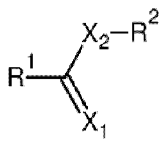

(I)

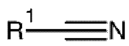

(II)

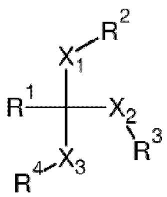

(III)

wobei

$Z_1$ eine Zahl >0 ist
$Z_2$ eine Zahl >0 ist

$$Z_1/Z_2 \geq 1$$

$Z_3$ eine Zahl >0 ist

$$Z_1 > Z_3$$

$R_1$, $R_2$, $R_3$ und $R_4$ sind unabhängig voneinander ausgewählt aus einer Gruppe von chemischen funktionellen Gruppen geringer Polarität, bestehend aus Wasserstoff, gesättigtem $C_1$-$C_{24}$-Alkyl, ungesättigtem $C_1$-$C_{24}$-Alkyl, N-Alkyl, $C_1$-$C_{12}$-Alkylphenyl, Aryl mit 6 bis 20 Ringatomen, Heterocyclyl mit 5 bis 20 Ringatomen, alle diese gegebenenfalls substituiert durch Reste ausgewählt aus einer Gruppe hochpolarer chemischer Reste, bestehend aus Hydroxy-, Alkoxy-, Cyano- und Carbamoylresten;
$X_1$, $X_2$ und $X_3$ sind unabhängig voneinander ausgewählt aus einer Gruppe bestehend aus O, S und NH;

ii. Umsetzung mit mindestens einer HO-funktionalisierten Substanz der Formel (IV)

$$M_x(OH)_yR^5_z \qquad \text{(IV)}$$

wobei M ausgewählt ist aus der Gruppe bestehend aus Al, Si, Ti, Fe, Cu, Zn,
x, z sind ganze Zahlen im Bereich von 0 bis 8,
y ist eine ganze Zahl im Bereich von 1 bis 8,

$$x+z > 0$$

und $R^5$ ist ausgewählt aus einer Gruppe bestehend aus H, gesättigtem C1-C24-Alkyl, 5-ungesättigtem C1-C24-Alkyl und C1-C12-Alkylphenyl, während

die chemische Substanz der Formel (I), (II) oder (III) ausgewählt ist aus einer Gruppe bestehend aus 2-Hydroxybenzoesäure, 3-Hydroxybenzoesäure, 4-Hydroxybenzoesäure, 2-Hydroxynaphthoesäure, 3-Hydroxynaphthoesäure, 4-Hydroxynaphthoesäure, 6-Hydroxynaphthoesäure und deren Estern oder Amiden, 2-Hydroxybenzonitril, 3-Hydroxybenzonitril, 4-Hydroxybenzonitril, 2-Hydroxynaphtonitril, 3-Hydroxynaphtonitril, 4-Hydroxynaphtonitril, Hydroxynaphtonitril.

**2.** Verfahren nach Anspruch 1, wobei das filmbildende Flammschutzmittel nach der Herstellung mit mindestens einer schwer entflammbaren Substanz aus der Gruppe bestehend aus anorganischen Oxiden, Hydroxiden, Carbonaten, Sulfaten, Phosphaten, Chloriden, Bromiden, Kohlenhydraten, Amiden, Melaminen, Harnstoffen, Guanidinen, Guanidinsalzen, Wachsen und thermoplastischen Materialien in Kontakt gebracht wird, wobei die schwer entflammbaren Substanzen optional Halogen enthalten.

**3.** Verfahren nach Anspruch 2, wobei M zumindest teilweise Fe und die schwer entflammbare Substanz ein chlorierter Zucker ist.

**4.** Verfahren nach einem der vorhergehenden Ansprüche, wobei das filmbildende Flammschutzmittel vor Schritt (i), nach Schritt (i) oder nach Schritt (ii) mit einem hydrophoben Stoff aus der Gruppe bestehend aus Bindemitteln, Thermoplasten, Duroplasten, Wachsen, Ölen, Fetten und Lösungsmitteln vermischt wird.

**5.** Verfahren nach einem der vorhergehenden Ansprüche, wobei die $Z_2$ Mol eines oder mehrerer Silane vor oder nach Schritt (i) teilweise hydrolysiert werden.

**6.** Verfahren nach einem der vorhergehenden Ansprüche, wobei Ton in Schritt (i), nach Schritt (i), in Schritt (ii) oder nach Schritt (ii) zugegeben wird.

**7.** Filmbildendes Flammschutzmittel, hergestellt nach dem Verfahren nach einem der Ansprüche 1-6.

**8.** Filmbildendes Flammschutzmittel nach Anspruch 7, wobei der Lösungsmittelgehalt im Flammschutzmittel weniger als 10 g pro 100 g Flammschutzmittel, bevorzugt weniger als 5 g pro 100 g Flammschutzmittel und besonders bevorzugt weniger als 2 g pro 100 g Flammschutzmittel beträgt.

**9.** Filmbildendes Flammschutzmittel mit Stickstoff und Silizium in seiner chemischen Zusammensetzung, hergestellt durch Umsetzung von $Z_1$ Mol primärer und/oder sekundärer Amineinheiten mit $Z_3$ Mol einer aus Carbonsäuren oder Kohlensäure erhältlichen chemischen Substanz der Formel (I), (II) oder (III).

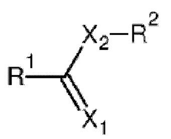

(I)

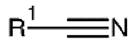

(II)

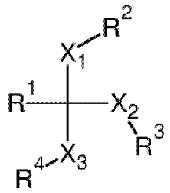

(III)

$Z_1$ eine Zahl >0 ist
$Z_2$ eine Zahl >0 ist

$$Z_1/Z_2 \geq 1$$

$Z_3$ eine Zahl >0 ist

$$Z_1 > Z_3$$

wobei $R_1$, $R_2$, $R_3$ und $R_4$ unabhängig voneinander aus einer Gruppe von chemischen Resten geringer Polarität ausgewählt sind, die aus Wasserstoff, gesättigtem $C_1$-$C_{24}$-Alkyl, ungesättigtem $C_1$-$C_{24}$-Alkyl, N-Alkyl, $C_1$-$C_{12}$-Alkylphenyl, Aryl mit 6 bis 20 Ringatomen und Heterocyclyl mit 5 bis 20 Ringatomen besteht, wobei alle diese Reste optional durch Reste substituiert sind, die aus einer Gruppe von chemischen Resten hoher Polarität ausgewählt sind, die aus Hydroxy-, Alkoxy-, Cyano- und Carbamoylresten besteht,
$X_1$, $X_2$ und $X_3$ sind unabhängig voneinander aus einer Gruppe ausgewählt, die aus O, S und NH besteht, wobei die primären und/oder sekundären Amineinheiten kovalente Bindungen zu $Z_2$ Mol eines oder mehrerer zumindest teilweise hydrolysierbarer Silane aufweisen, während die chemische Substanz der Formel (I), (II) oder (III) ausgewählt ist aus der Gruppe bestehend aus 2-Hydroxybenzoesäure, 3-Hydroxybenzoesäure, 4-Hydroxybenzoesäure, 2-Hydroxynaphthoesäure, 3-Hydroxynaphthoesäure, 4-Hydroxynaphthoesäure, 6-Hydroxynaphthoesäure und deren Estern oder Amiden, 2-Hydroxybenzonitril, 3-Hydroxybenzonitril, 4-Hydroxybenzonitril, 2-Hydroxynaphthoenitril, 3-Hydroxynaphthoenitril, 4-Hydroxynaphthoenitril, Hydroxynaphthoenitril.

**10.** Filmbildendes Flammschutzmittel nach Anspruch 9, wobei das filmbildende Flammschutzmittel mit mindestens einer HO-funktionalisierten Substanz der Formel (IV)

$$M_x(OH)_yR^5_z \qquad \text{(IV)}$$

umgesetzt ist, wobei M ausgewählt ist aus der Gruppe bestehend aus Al, Si, Ti, Fe, Cu, Zn,
x, z sind ganze Zahlen im Bereich von 0 bis 8,
y ist eine ganze Zahl im Bereich von 1 bis 8,

$$x+z > 0$$

und $R^5$ ausgewählt ist aus der Gruppe bestehend aus H, gesättigtem $C_1$-$C_{24}$-Alkyl, ungesättigtem $C_1$-$C_{24}$-Alkyl und $C_1$-$C_{12}$-Alkylphenyl.

**11.** Filmbildendes Flammschutzmittel nach einem der Ansprüche 7-10, wobei das Flammschutzmittel ausgewählt ist aus der Gruppe der chemischen Strukturen in Formel (V), (VI), (VII) und (VIII)

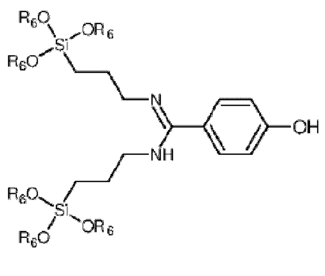

(V)

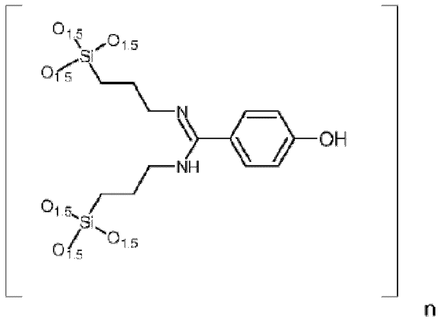

(VI)

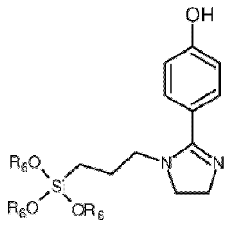

(VII)

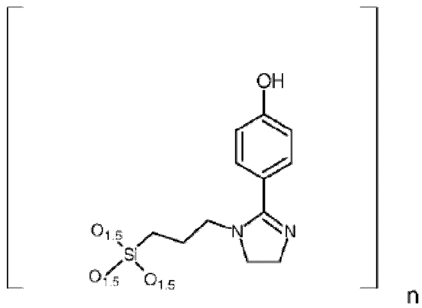

(VIII)

wobei n eine gerade Zahl von 2 bis 16 ist und $R_6$ = H, Alkyl oder Ton, wobei $R_6$ optional durch kovalente Bindungen miteinander verbunden ist.

**12.** Filmbildendes Flammschutzmittel nach einem der Ansprüche 7-11, wobei das Flammschutzmittel in Gemischen enthalten ist, die schwer entflammbare Substanzen ausgewählt aus der Gruppe bestehend aus anorganischen Oxiden, Hydroxiden, Carbonaten, Sulfaten, Phosphaten, Chloriden, Bromiden, Kohlenhydraten, Amiden, Melaminen, Harnstoffen, Guanidinen, Guanidinsalzen, Wachsen, thermoplastischen Materialien, die optional Halogen enthalten können, sowie in Kombinationen aus zwei oder mehr davon enthalten.

**13.** Filmbildendes Flammschutzmittel nach einem der Ansprüche 7-12, wobei das Flammschutzmittel auf einer Oberfläche ausgewählt aus der Gruppe bestehend aus Papier-, Karton- oder Holzoberflächen oder in Holzplatten, -brettern, -laminaten oder -spanplatten enthalten ist.

**14.** Artikel oder Produkt, umfassend mindestens einen der folgenden Stoffe: Bindemittel, Thermoplaste, Duroplaste, Wachse, Öle, Fette, Lösungsmittel, Holzplatten, Bretter, Laminate, Spanplatten, wobei der Artikel zusätzlich mindestens ein filmbildendes Flammschutzmittel gemäß einem der vorhergehenden Ansprüche enthält.

## Revendications

**1.** Procédé de préparation d'un retardateur de flamme filmogène comprenant de l'azote et du silicium dans sa composition chimique, ledit procédé comprenant les étapes suivantes :

i. Conversion de $Z_1$ moles d'un groupement amine, choisi parmi les amines primaires et secondaires, lié de manière covalente à $Z_2$ moles d'un ou plusieurs groupements silanes au moins partiellement hydrolysables, avec $Z_3$ moles d'une substance chimique choisie parmi les substances chimiques obtenues à partir d'acides carboxyliques ou d'acide carbonique et représentées par la formule (I), (II) ou (III)

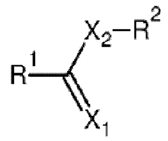

(I)

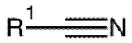

(II)

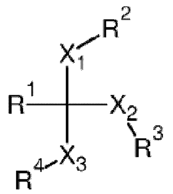

(III)

où

$Z_1$ est un nombre > 0
$Z_2$ est un nombre > 0

$$Z_1/Z_2 \geq 1$$

$Z_3$ est un nombre > 0

$$Z_1 > Z_3$$

$R_1$, $R_2$, $R_3$ et $R_4$ sont indépendamment choisis parmi un groupe de groupes fonctionnels chimiques de faible polarité constitué d'hydrogène, d'alkyle saturé en $C_1$-$C_{24}$, d'alkyle insaturé en $C_1$-$C_{24}$, de N-alkyle, d'alkylphényle en $C_1$-$C_{12}$, d'aryle comportant de 6 à 20 atomes de cycle, d'hétérocyclyle comportant de 5 à 20 atomes de cycle, tous ces groupes étant éventuellement substitués par des groupes choisis parmi un groupe de groupes chimiques de forte polarité constitué d'hydroxy, d'alcoxy, de cyano et de carbamoyle
$X_1$, $X_2$ et $X_3$ sont indépendamment choisis parmi O, S et NH;

ii. conversion avec au moins une substance fonctionnalisée par HO de formule (IV)

$$M_x(OH)_yR^5_z \qquad (IV)$$

où M est choisi dans le groupe constitué par Al, Si, Ti, Fe, Cu, Zn,
x et z sont des nombres entiers compris entre 0 et 8,
y est un nombre entier compris entre 1 et 8,

$$x+z > 0$$

et $R^5$ est choisi dans le groupe constitué par H, un alkyle saturé en $C_1$-$C_{24}$, un alkyle insaturé en $C_1$-$C_{24}$ et un alkylphényle en $C_1$-$C_{12}$, tandis que

la substance chimique de formule (I), (II) ou (III) est choisie dans un groupe constitué par l'acide 2-hydroxybenzoïque, l'acide 3-hydroxybenzoïque, l'acide 4-hydroxybenzoïque, l'acide 2-hydroxynaphtoïque, l'acide 3-hydroxynaphtoïque, l'acide 4-hydroxynaphtoïque, l'acide 6-hydroxynaphtoïque et leurs esters ou amides, le 2-hydroxybenzonitrile, le 3-hydroxybenzonitrile, le 4-hydroxybenzonitrile, le 2-hydroxynaphtonitrile, le 3-hydroxynaphtonitrile, le 4-hydroxynaphtonitrile, l'hydroxynaphtonitrile.

**2.** Procédé selon la revendication 1, dans lequel le retardateur de flamme filmogène, après préparation, est mis en contact avec au moins une substance faiblement inflammable choisie dans le groupe constitué des oxydes inorganiques, hydroxydes, carbonates, sulfates, phosphates, chlorures, bromures, glucides, amides, mélamines, urées, guanidines, sels de guanidines, cires et matières thermoplastiques, les substances faiblement inflammables

contenant éventuellement un halogène.

**3.** Procédé selon la revendication 2, dans lequel M est au moins partiellement choisi comme étant Fe et la substance faiblement inflammable est choisie comme étant un sucre chloré.

**4.** Procédé selon l'une quelconque des revendications précédentes, dans lequel le retardateur de flamme filmogène avant l'étape (i), après l'étape (i) ou après l'étape (ii) est mélangé à une matière hydrophobe choisie dans un groupe comprenant des liants, des thermoplastiques, des thermodurcissables, des cires, des huiles, des graisses et des solvants.

**5.** Procédé selon l'une quelconque des revendications précédentes, dans lequel les moles $Z_2$ d'un ou plusieurs silanes sont partiellement hydrolysées, avant ou après l'étape (i).

**6.** Procédé selon l'une quelconque des revendications précédentes, dans lequel l'argile est ajoutée à l'étape (i), après l'étape (i), à l'étape (ii) ou après l'étape (ii).

**7.** Retardateur de flamme filmogène fabriqué selon le procédé selon l'une quelconque des revendications 1 à 6.

**8.** Retardateur de flamme filmogène selon la revendication 7, dans lequel la teneur en solvant est inférieure à 10 g pour 100 g retardateur de flamme, de préférence inférieure à 5 g pour 100 g retardateur de flamme et, idéalement, inférieure à 2 g pour 100 g retardateur de flamme.

**9.** Retardateur de flamme filmogène comprenant de l'azote et du silicium dans sa composition chimique, fabriqué par conversion de $Z_1$ mole de groupements amine primaire et/ou secondaire avec $Z_3$ moles d'une substance chimique obtenue à partir d'acides carboxyliques ou d'acide carbonique et représentée par la formule (I), (II) ou (III).

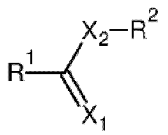

(I)

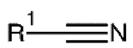

(II)

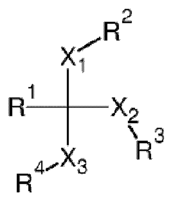

(III)

où

$Z_1$ est un nombre > 0
$Z_2$ est un nombre > 0

$$Z_1/Z_2 \geq 1$$

$Z_3$ est un nombre > 0

$$Z_1 > Z_3,$$

où $R_1$, $R_2$, $R_3$ et $R_4$ sont indépendamment choisis parmi un groupe de fractions chimiques de faible polarité comprenant l'hydrogène, un alkyle saturé en $C_1$-$C_{24}$, un alkyle insaturé en $C_1$-$C_{24}$, un N-alkyle, un alkylphényle en $C_1$-$C_{12}$, un aryle de 6 à 20 atomes de cycle, un hétérocyclyle de 5 à 20 atomes de cycle, tous ces groupes étant éventuellement substitués par des fractions choisies parmi un groupe de fractions chimiques de forte polarité comprenant des fractions hydroxy, alcoxy, cyano et carbamoyle,

$X_1$, $X_2$ et $X_3$ sont indépendamment choisis parmi un groupe comprenant O, S et NH,
où les fractions amines primaires et/ou secondaires ayant des liaisons covalentes avec $Z_2$ moles d'un ou plusieurs silanes au moins partiellement hydrolysables, tandis que la substance chimique de formule (I), (II) ou (III) est choisie dans un groupe constitué de l'acide 2-hydroxybenzoïque, de l'acide 3-hydroxybenzoïque, de l'acide 4-hydroxybenzoïque, de l'acide 2-hydroxynaphtoïque, de l'acide 3-hydroxynaphtoïque, de l'acide 4-hydroxynaphtoïque, de l'acide 6-hydroxynaphtoïque et de leurs esters ou amides, du 2-hydroxybenzonitrile, du 3-hydroxybenzonitrile, du 4-hydroxybenzonitrile, du 2-hydroxynaphtonitrile, du 3-hydroxynaphtonitrile, du 4-hydroxynaphtonitrile, de l'hydroxynaphtonitrile.

**10.** Retardateur de flamme filmogène selon la revendication 9, dans lequel le retardateur de flamme filmogène est transformé avec au moins une substance fonctionnalisée par HO de formule (IV)

$$M_x(OH)_yR^5_z \qquad (IV)$$

où M est choisi dans le groupe constitué par Al, Si, Ti, Fe, Cu, Zn,
x et z sont des nombres entiers compris entre 0 et 8,
y est un nombre entier compris entre 1 et 8,

$$x+z > 0$$

et $R^5$ est choisi dans le groupe constitué par H, un alkyle saturé en $C_1$-$C_{24}$, un alkyle insaturé en $C_1$-$C_{24}$ et un alkylphényle en $C_1$-$C_{12}$.

**11.** Retardateur de flamme filmogène selon les revendications 7 à 10, dans lequel le retardateur de flamme est choisi dans le groupe représenté par les structures chimiques des formules (V), (VI), (VII) et (VIII)

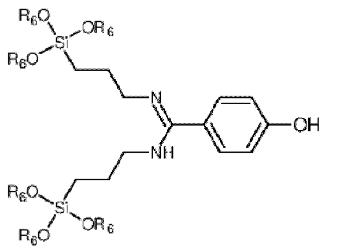

(V)

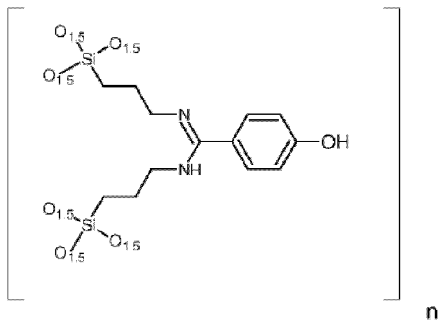

(VI)

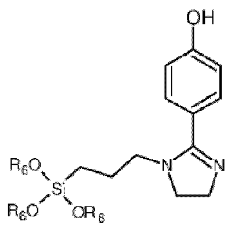

(VII)

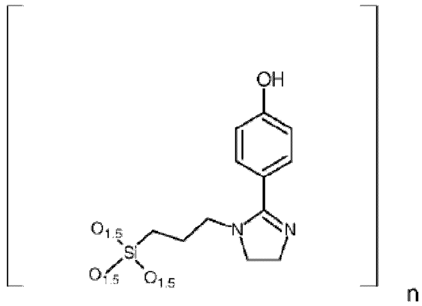

(VIII)

où n est un nombre pair compris entre 2 et 16 et $R_6$ = H, alkyle ou argile, où $R_6$ est éventuellement relié par des liaisons covalentes.

**12.** Retardateur de flamme filmogène selon les revendications 7 à 11, dans lequel le retardateur de flamme est présent dans des mélanges comprenant des substances faiblement inflammables choisies dans le groupe constitué d'oxydes, d'hydroxydes, de carbonates, de sulfates, de phosphates, de chlorures, de bromures, de glucides, d'amides, de mélamines, d'urées, de guanidines, de sels de guanidines, de cires et de matières thermoplastiques, qui peuvent éventuellement contenir des halogènes, y compris toute combinaison de deux ou plusieurs de ces composés.

**13.** Retardeur de flamme filmogène selon les revendications 7 à 12, présent sur une surface choisie parmi le groupe constitué de papier, de carton, de bois ou dans des plaques, panneaux, stratifiés et panneaux de particules en bois.

**14.** Article ou produit comprenant au moins un liant, un thermoplastique, un thermodurcissable, une cire, une huile, une graisse, un solvant, une plaque de bois, un panneau, un stratifié ou un panneau de particules, ledit article comprenant en outre au moins un retardateur de flamme filmogène selon l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109233402 A
- CN 108822697 A
- CN 108641559 A
- US 2015004402 A
- CN 102241904 A
- CN 101914333 A
- KR 20080047146
- EP 1576073 B1
- US 5041514 A
- US 4826899 A
- US 4965657 A
- US 5443911 A
- WO 17179340 A1
- EP 2097485 A2
- EP 1449880 B1
- EP 1627896 B1
- EP 1607400 B1
- EP 1516960 A1
- EP 2260078 B1
- WO 2006045713 A
- EP 1740643 B1
- EP 1756202 B1
- EP 1943293 B1
- EP 3341339 B1
- CN 108485172 A
- US 2019084879 AA


### Non-patent literature cited in the description


- Science of Synthesis: Houben-Weyl Methods of Molecular Transformations. *Compounds with Four and Three Carbon-heteroatom Bonds*, vol. 22, 379
- *CHEMICAL ABSTRACTS*, 919-30-2
- *CHEMICAL ABSTRACTS*, 99-76-3
- *CHEMICAL ABSTRACTS*, 5089-72-5
- **HINDAWI**. Characterization of Colombian clay and its potential use as adsorbent. *The Scientific World Journal*, vol. 2018
- Assessment of carcinogenic heavy metals in some Nigerian clays used for pharmaceutical purposes,. *DRP Journal of Earth Sciences & Environmental Studies*, ISSN 2472-6397
- *CHEMICAL ABSTRACTS*, 56038-13-2